(19) Europäisches Patentamt
European Patent Office
Office européen des brevets

(11) EP 0 848 668 B1

(12) **EUROPÄISCHE PATENTSCHRIFT**

(45) Veröffentlichungstag und Bekanntmachung des Hinweises auf die Patenterteilung:
**14.04.1999 Patentblatt 1999/15**

(21) Anmeldenummer: **96930977.2**

(22) Anmeldetag: **29.08.1996**

(51) Int. Cl.$^6$: **B44C 1/16**, G11B 23/087, G11B 23/40

(86) Internationale Anmeldenummer:
**PCT/EP96/03798**

(87) Internationale Veröffentlichungsnummer:
**WO 97/09180 (13.03.1997 Gazette 1997/12)**

(54) **TRANSFERFOLIE ZUM BEDRUCKEN VON GEGENSTÄNDEN UND DAMIT BEDRUCKTER GEGENSTAND**

TRANSFER FOIL FOR PRINTING ON OBJECTS AND OBJECTS PRINTED THEREWITH

FEUILLE DE TRANSFERT POUR IMPRESSION SUR DES OBJETS ET OBJET AINSI IMPRIME

(84) Benannte Vertragsstaaten:
**DE FR GB IT**

(30) Priorität: **08.09.1995 DE 29514420 U**

(43) Veröffentlichungstag der Anmeldung:
**24.06.1998 Patentblatt 1998/26**

(73) Patentinhaber:
**EMTEC Magnetics GmbH**
**67059 Ludwigshafen (DE)**

(72) Erfinder:
• **NÄGELE, Gilbert**
**D-77694 Kehl (DE)**
• **WOLLENSACK, Heinrich**
**D-77694 Kehl (DE)**
• **SCHÖTTLE, Klaus**
**F-67100 Strasbourg (FR)**

(56) Entgegenhaltungen:
**EP-A- 0 451 582          US-A- 3 886 020**
**US-A- 5 318 739**

• **PATENT ABSTRACTS OF JAPAN vol. 008, no. 166 (M-314), 2.August 1984 & JP,A,59 062184 (TOPPAN INSATSU KK), 9.April 1984,**

**Beschreibung**

Die Erfindung betrifft eine Transferfolie zum Bedrucken von wenigstens teilweise räumlichen Gegenständen, wobei der Gegenstand wenigstens eine Erhöhung mit einem oberen Niveau aufweist, die auf einer Ebene mit einem unteren Niveau angeordnet ist, und die Erhöhung eine Draufsichts-Konturlinie besitzt.

Es ist bekannt, weiche und harte Gegenstände mittels einer Transferfolie, auf die Druck unter Temperaturerhöhung aufgebracht wird, zu bedrucken. Der Druck wird über eine Abroll- oder Stempelvorrichtung aufgebracht und die außenliegende Haftschicht der Transferfolie haftet dann zusammen mit der eigentlichen Farbdruckschicht auf dem Gegenstand.

US-A-3,836,020 beschreibt ein Verfahren zur Aufbringung eines Dekors auf Teller oder plattenförmige Gegenstände mittels kreisrunder Transferfolien, die als wesentliches Merkmal radiale Einschnitte in dem Bereich aufweisen, in dem die Transferfolie der Oberflächenform des Gegenstandes wegen mangelnder Elastizität nicht folgen kann. Als Ergebnis ist in einer Anwendung der Anzahl der Einschnitte entsprechend, dreieckförmige Unterbrechungen des Drucks zu erkennen und in der anderen Anwendung ein teilweises Übereinanderliegen der links und rechts von den Einschnitten liegenden Flächen zu erkennen, was eine Überlagerung des Druckes bedeutet.

Mit der DE-B-3 813 359 (O.Z. 0078/5358) der Anmelderin ist es auch bekannt, das Gehäuse einer Magnetbandkassette flächig zu bedrucken, wobei mittels paarweise gegenüberstehender Druckwerke beide Gehäusewände durch ein- oder mehrfaches Bedrucken unterschiedlicher Muster und/oder Farben gleichzeitig behandelt werden. Die Druckwerke sind dabei z.B. geeignet für Offset- bder Tampondruck.

Bei diesem flächigen Druckverfahren werden bei Kompaktkassetten nur die großen Gehäuseflächen entweder ohne die Oberflächen der Kopferhöhung bedruckt, oder letztere Oberflächen werden in einer zweiten Druckstation noch separat bedruckt,

Es ist Aufgabe der Erfindung, die Flächen von unterschiedlichem Niveau möglichst einfach und in einem Arbeitsgang zu bedrucken und dafür eine geeignete Transferfolie bereitzustellen.

Die Erfindung löst diese Aufgabe mit einer Transferfolie der eingangs beschriebenen Art, die im Bereich der Konturlinie(n) teilweise eingeschnitten ist. So wird eine Einschnürung der Transferfolie im Bereich der Konturlinie(n) verhindert. Dadurch lassen sich vorteilhaft kurze Bedruckungszeiten bei problemlosem Folientransport erzielen und befriedigende Bedruckungen auf den bedruckten Gegenständen.

Praktisch befinden sich der Schnitt/die Einschnitte bei einem Gegenstand mit einer Erhöhung mit Übergangsbereichen im Bereich deren Konturlinien. Dadurch lassen sich die sich bei nicht eingeschnittener Transferfolie normalerweise ausbildenden, von jedem Übergangsbereich (jeder Ecke) ausgehenden Falten, da sich die Folie dort nicht genügend frei verformen kann bzw. frei tiefziehen läßt, vermeiden. Während des Bedruckungsvorgangs im Druckwerk lassen sich die bedruckenden Folienteile ohne Falten um den Übergangsbereich (die Ecken) legen, so daß eine faltenfreie, gute Bedruckung erfolgen kann.

Unter Übergangsbereich im Sinne der Erfindung wird ein Übergang der Konturlinie vom Längsrichtungsbereich in den Querrichtungsbereich oder umgekehrt verstanden. Der Übergang kann dabei als mehr oder weniger scharfe Ecke (Eckbereich) oder auch kurvenförmig (z.B. Kreisbogen) ausgebildet sein.

Bei der Anordnung der Einschnitte ist es zweckmäßig, daß Konturlinien, die im wesentlichen parallel zur Längsrichtung der Transferfolie verlaufen, vollständige Längseinschnitte aufweisen und etwa quer zur Längsrichtung verlaufende Konturlinien mit Teil-Quer-Einschnitten versehen sind.

Dabei wird vorausgesetzt, daß die Transferfolie in Längsrichtung Wickel- und somit Zugkräften ausgesetzt ist und somit reiß- und einschnürungsgefährdet ist.

In der praktischen Ausbildung der Längs-Einschnitte sind diese mit über die Konturlinie der Erhöhung hinausragenden Verlängerungseinschnitten versehen.

Die Länge der Verlängerungseinschnitte sollte so dimensioniert werden, daß dieselben mindestens etwa dem Abstand des unteren vom oberen Niveaus voneinander multipliziert mit dem Faktor $\sqrt{2}$ (1,414...) entspricht.

Damit wird wiederum eine Einschnürung der Folie und damit Faltenbildung vermieden.

Zweckmäßig können die Einschnitte auch als vorgestanzte Trennlinien ausgebildet sein.

Eine Transferfolie zum Bedrucken von Kompaktkassetten kann praktisch ausgebildet sein, daß die im wesentlichen plane(n) Außenfläche(n) die untere Ebene und die Oberfläche der von der Vorderwand ausgehenden Gehäuseerhöhung das obere Niveau bilden und Einschnitte an der Konturlinie der Übergangsbereiche der Gehäuseerhöhung angeordnet sind.

Damit werden die Vorteile der Erfindung durch die Anwendung auf das Bedrucken von Kompaktkassetten erhalten. Die Ausbildung der Einschnitte ist vorteilhaft gegeben, wenn die Teil-Quereinschnitte umso kürzer sind, je größer der Draufsichtswinkel der Übergangsbereiche ist.

Damit wird erreicht, daß selbst dünneres Folienmaterial problemlos und mit guten Druckergebnissen verarbeitbar wird. Außerdem ist es zweckmäßig, wenn jeder Teil-Quereinschnitt in seiner Länge von der Größe des Abstandes des unteren und oberen Niveaus voneinander abhängig ist.

Ein räumlicher Gegenstand mit einer mittels Transferfolie hergestellter Bedruckung, wobei eine Erhöhung mit wenigstens zwei innerhalb einer Ebene liegenden Übergangsbereich vorhanden ist, wobei die Oberfläche der Erhöhung das obere Niveau und die Ebene das untere Niveau bilden und wobei die Erhöhung eine Draufsichts-Konturlinie, die die Übergangsbereiche einschließt, besitzt, ist erfindungsgemäß gegeben, wenn im Bereich der Konturlinie(n) zwischen den Übergangsbereichen Bedruckungsstörungen in der Randzone der Bedruckung vorhanden sind.

Damit läßt sich das Charakteristische der mittels der erfindungsgemäßen Transferfolie erreichten Bedruckung erkennen, ohne daß die Bedruckungsqualität wesentlich beeinträchtigt würde.

Das Vorhergesagte läßt sich ohne weiteres daran ablesen, daß die Randzonen-Abweichungen der Bedruckung in der Größenordnung von 0,05-0,2 mm liegen.

Bei einer Kompaktkassette, deren Außenflächen wenigstens teilweise mittels einer Transferfolie bedruckt sind, wobei die im wesentlichen planen Außenflächen der Kassettenwände die Ebene mit dem unteren Niveau und die Oberfläche der Trapezform-Kopferhöhung die Ebene mit dem oberen Niveau bilden, wobei zwischen dem oberen und dem unteren Niveau eine trapezförmige Konturlinie vorhanden ist, läßt sich eine erfindungsgemäße Bedruckung daran erkennen, daß im Bereich der Konturlinie zwischen den Eckbereichen der Trapezform, die durch die kürzere Strecke der Trapezform miteinander verbunden sind, Bedruckungsstörungen in Form von Randzonen-Geradlinigkeitsabweichungen im Bereich von etwa 0,05 bis 0,2 mm vorhanden sind.

In genauerer Ausbildung können die Bedruckungsstörungen auf einer Länge (L2) von ca. 40 mm auf der kürzeren Trapezform-Parallelstrecke auftreten.

Wie bereits oben erwähnt, sind die Bedruckungsstörungen nur in einer vernachlässigbaren Größenordnung vorhanden. Die Vorteile der Transferbedruckung überwiegen da beträchtlich.

Nachfolgend wird die Erfindung anhand von in der Zeichnung dargestellten Beispielen und Meßdiagrammen beschrieben.

Es ist dargestellt in

Figur 1    eine Kompaktkassette mit darüberliegender, als durchsichtige Folie dargesteller Transferfolie

Figur 2    die Kassette mit Folie aus Anspruch 1 und einer Druckvorrichtung

Figur 3    die erfindungsgemäß eingeschnittene Transferfolie

Figur 4    die erfindungsgemäß eingeschnittene Transferfolie über einer perspektiv dargestellten Kassettenhälfte

Figur 5    eine Kassette in Rückansicht

Figur 6    eine erfindungsgemäß eingeschnittene Transferfolie und eine Stirnansicht der transportierten Folie

Figur 7    eine schematische Transferfolien-Transportvorrichtung und Druckstation

Figur 8-10    Diagramme zu Messungen der Faltenbildung und des Durchhängens der Transferfolie

Figur 11    eine mit einer erfindungsgemäßen Transferfolie bedruckte Kassette.

Die Kompaktkassette K hat eine Ebene E1 auf einem unteren Niveau, das durch die Außenfläche der Kassettengehäusewand gebildet wird, und eine Oberfläche E2 auf der Kopf-Erhöhung, die von der Frontseite (S) der Kassette K ausgeht, wobei die Oberfläche E2 auf einem oberen Niveau liegt. Die Konturlinie der Kopf-Erhöhung ist mit L bezeichnet, Zwischen der Konturlinie L und der Ebene E2 kann ein hier schmal dargestellter schräger Übergang D vorhanden sein. Beide, die Fläche der Ebene E1 und die Oberfläche E2, sollen mittels der Transferfolie F, die darüberliegend und durchsichtig dargestellt ist, gleichzeitig bedruckt werden.

Ohne irgendwelche Maßnahmen würde die Folie F bei einer Druckbeaufschlagung beider Flächen E1 und E2 zumindest an den Eckbereichen B1 und B2 der Kopferhöhung die schematisch angedeuteten Falten G bilden und mit Sicherheit würden in diesen Bereichen auffällige Bedruckungsfehler entstehen, da sich die Folie F, die im allgemeinen aus Polyester besteht, aber auch aus anderen geeigneten Folienmaterialien bestehen kann, sich in diesen Übergangsbereichen, hier: Eckbereichen B1 und B2, nicht genügend frei verformen kann bzw. sich nicht ausreichend frei tiefziehen läßt.

Die Eckbereiche können scharf-eckig oder auch mehr oder weniger abgerundet ausgebildet sein.

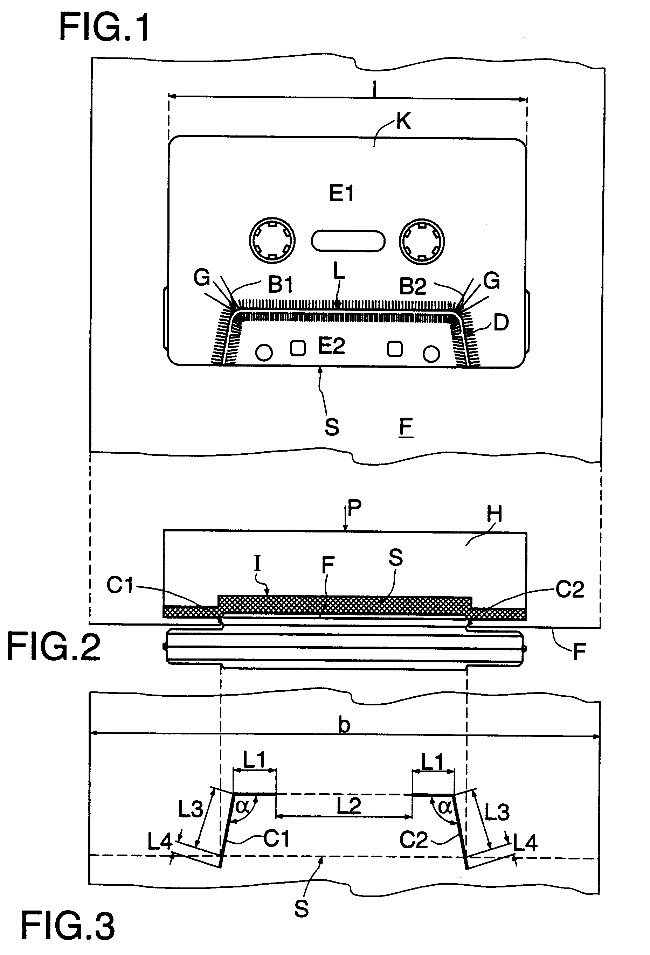

Um oben erwähnte Fehler zu vermeiden, werden in den Eckbereichen B1 und B2 Einschnitte C1 und C2 in der Transferfolie F vorgesehen, wie z.B. in Figuren 2 und 3 gezeigt. Die Einschnitte C1, C2 bestehen jeder aus dem Etwa-Längseinschnitt der Länge L3 und dem Quereinschnitt der Länge L1, wobei der Etwa-Längseinschnitt der Länge L3 bis zur Frontseite S der Kassette K noch um den Verlängerungseinschnitt der Länge L4 verlängert ist,

In Figur 2 ist ein Druckstempel H mit wenigstens einer gummielastischen Unterschicht I im Zeitpunkt kurz vor oder kurz nach einem Bedruckungsvorgang dargestellt, währenddessen derselbe einer Druckbeanspruchung ausgesetzt werden soll oder schon war. An den Stellen C1 und C2 ist die Folie F bereits eingeschnitten, was direkt durch Vorstanzen oder durch Anbringen einer vorgestanzten Trennlinie und Einreißen erfolgt sein kann.

Zwischen den Quereinschnitten der Länge L1 befindet sich der nicht eingeschnittene Zwischenteil der Folie mit der Länge L2.

Die ganze Breite der Folie ist b, so daß die Folie beiderseits über die Kassette K in Längsrichtung übersteht.

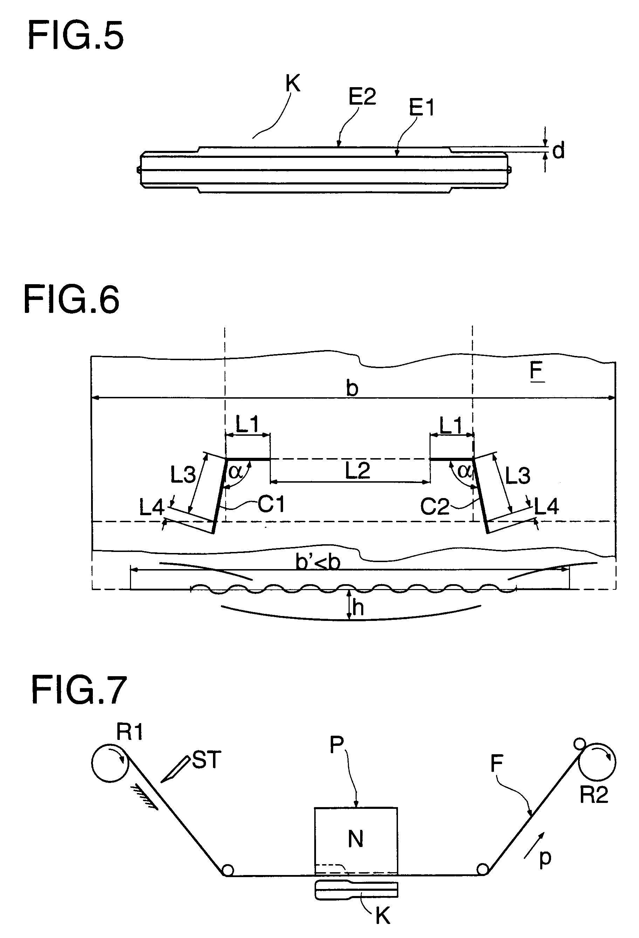

Die Einschnitte C1 und C2 befinden sich im Bereich der Konturlinie L, wobei letztere auch durchaus am Außenrand des Übergangs D liegen kann, wie in Figur 4 dargestellt. In Figur 4 ist die räumliche Anordnung der Einschnitte C1 und C2 gut erkennbar. Durch die Entlastungseinschnitte C1 und C2 kann sich die Folie F in den Eckbereichen B1 und B2 während der Abwärtsbewegung des Druckstempels H einwandfrei, glatt und faltenlos um die Ecken legen, wobei die Folie F sowohl auf der Fläche E1 als auch auf der Fläche E2 störungsfrei aufliegt und damit ein einwandfreies Bedruckungsergebnis erzielt wird.

Die Länge L1 der Quereinschnitte ist aus mehreren Gründen kritisch bzw. sehr dimensionierungsbedürftig:

1. Die Faltenbildung soll vermieden werden.

2. Das Maß M zwischen dem Eckbereich B1, B2, wo der Längseinschnitt beginnt, bis zum seitlichen Folienrand ist durch die Reißfestigkeit des Folienmaterials begrenzt.

3. Der Mittelteil der transportierten Transferfolie darf, da an der der Kassette zugewandten Folienseite die Haftschicht auf der Lackschicht frei liegt, die Kassette nicht berühren, also sie darf nicht durchhängen.

4. Die Folie muß beim Bedrucken plan auf der Kassette aufliegen, um bei Mehrfarbdruck ein verschieben der Motive gegenüber der Kassette, sogenannte Passerungenauigkeiten zu verhindern.

5. Der Niveauunterschied der Flächen E1 und E2 muß berücksichtigt werden.

6. Der Winkel des oder der Übergangsbereiche (Eckbereiche) B1 und B2 spielt eine Rolle.

Die Länge L3 der Längseinschnitte entspricht der Konturlinien- oder Kantenlänge der Kopferhöhung. Die Länge der Verlängerungseinschnitte L4 ist vom Niveauunterschied oder Abstand zwischen den Niveaus E1 und E2 "d" abhängig, da die untere Fläche E1 die Bezugsfläche ist und L4 mindestens die Länge der Diagonalen besitzen muß (L4 = mind. $\sqrt{2} \cdot d$).

In Figur 7 ist der Verlauf der Transferfolie F beim Bedruckungsprozeß schematisch dargestellt.

Von der Abwickelrolle R1 läuft die Folie F durch die Stanze ST, wo die Einschnitte angebracht werden zur Bedruckungsstation N, die mit dem Druck P beaufschlagt wird und worin die Kassette K auf den Ebenen E1 und E2 gleichzeitig bedruckt wird, zur Aufwickelrolle R2, wobei ein Bandzug p von 6N aufgebracht wird, der zum Abwickeln der Folie F notwendig ist.

Figur 6 zeigt die Folie F hinter der Stanzstation ST und vor dem Aufwickeln. Die Einschnitte C1 und C2 sind angebracht. Darunter ist eine Querschnittsdarstellung über die eingeschnürte Folienbreite b' < b sichtbar. Das Maß h, die Höhe des etwa wellenförmigen Durchhängens der Folie F darf bei dem Bandzug von 6N, der Folienbreite b von 120 mm und den räumlichen Gegebenheiten der Bedruckungsstation N, die Größe von h = 3 mm nicht überschreiten aus den Gründen der Ziffer 3.

Oberhalb des Wellenbogens mit dem Maß h ist die Wellenform der Folie F im Mittelbereich angedeutet.

Die Höhe h des Durchhängens ist bei jeder vorgegebenen Foliendicke abhängig von der Differenzlänge L2, dabei ist L2 = b - 2M - 2L1 oder bezogen auf die Kassettenlänge l: $\overline{L2 = l - 2L1}$.

Bei der Kompaktkassette beträgt diese Länge l = 63,3 mm.

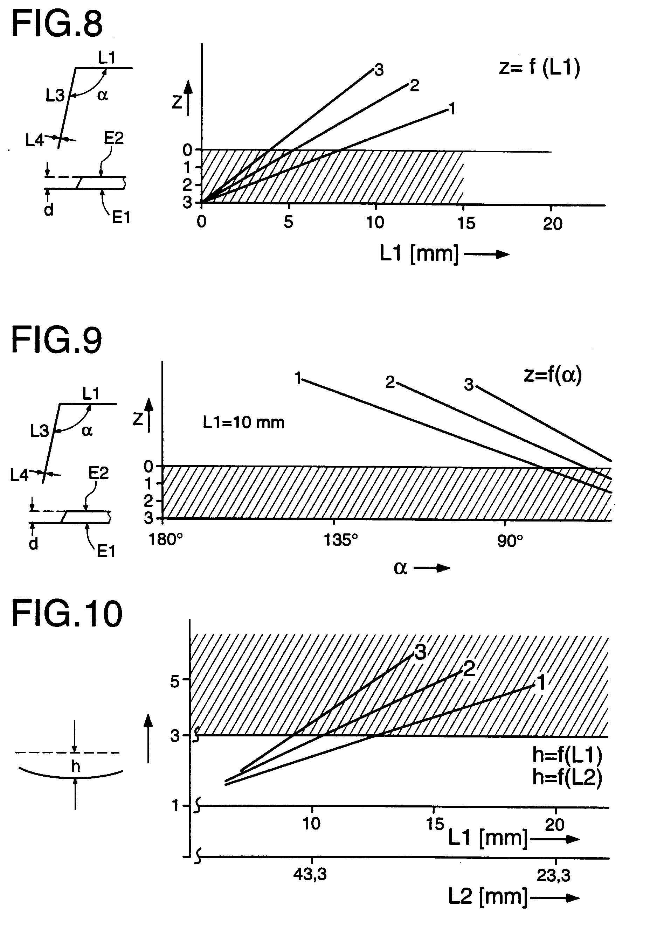

In den Diagrammen der Figuren 8-10 sind folgende Meßergebnisse dargestellt:

| | |
|---|---|
| Fig. 8 | z = f (L1) z = Zahl der Falten L1 = Länge der Quereinschnitte |
| Fig. 9 | z = f ($\alpha$) $\alpha$ = Winkel des Eckbereichs (zwischen L1 und L3, L4) |
| Fig. 10 | h = f (L1) h = Mittendurchhängungshöhe der Folie h = f (L2) |

Die Folienstärken wurden in allen Versuchen beibehalten (1) = 36 µm, (2) = 25 µm, (3) = 18 µm das Folienmaterial war jeweils Polyester (PET).

In Figur 8 ist der Winkel $\alpha$ = 102° Eck-Winkel der Kopferhöhung bei Kompaktkassetten konstant gehalten.

Es ergibt sich ein oberer Bereich, oberhalb des schraffierten Bereichs in dem Faltenbildung auftritt, in dem keine Faltenbildung mehr auftritt, unabhängig von der jeweiligen Folienstärke. L1 ist also je nach der gewünschten Folienstärke (1) -(3) entsprechend zu wählen. Die Minimallänge L1 liegt bei 4 mm bei der Folie (1) und ist bei Folie (3) nach oben unbegrenzt, allerdings tritt auch dann irgendwo der Durchhängungseffekt der Figur 10 auf.

In Figur 9 ist die Länge L1 des Quereinschnitts bei L1 = 10 mm konstant gehalten, entsprechend bei 2L1 ≙ 31,6 % der Kassettenlänge l, und der Winkel wurde von unter 90° bis ca. 135° variiert. Wiederum ist der untere schraffierte Bereich, der Bereich mit der unzulässigen Faltenbildung, und der Bereich darüber der faltenfreie. Mit wachsendem Winkel $\alpha$, möglichst ≥ 90° und festgehaltener Quereinschnittslänge L1 = 10 mm, nimmt die Faltenfreiheit zu.

Es wurde darüberhinausgehend auch festgestellt, daß die für die Faltenfreiheit notwendige Länge L1 mit wachsendem Winkel α abnimmt: bei 180° ist die Länge L1 = 0!

In Figur 10 ist die zulässige Höhe h der Durchhängung in der Mitte des Querschnitts der transportierten Folie F als Funktion der Quereinschnittslänge L1 und der Differenzlänge L2 aufgetragen.

Es ergibt sich der zulässige Bereich unterhalb des nicht zulässigen oberen schraffierten Bereiches, in dem die zu vermeidenden Kassettenberührungen auftreten, also bei einer maximal zulässigen Höhe der Durchhängung von h = 3 mm. Dieser Bereich wird von der Folie (1) bei L1 ~ 14 mm, der Folie (2) bei etwa L1 = 11 mm und der Folie (3) bei ca. L1 = 9 mm erreicht, die entsprechenden L2-Werte ergeben sich zu L2 = 35,5 mm (1), L2 = 41,3 mm (2) und L2 = 45,3 mm (3) .

Die Differenzlänge L2 hat eine besondere Bedeutung, die aus dem folgenden hervorgeht.

Es wurde bereits erwähnt, daß die Transferfolie aus einer z.B. PET-Folie besteht mit einer Lack- und/oder Farbschicht und einem Prägekleber auf der Oberseite davon.

Die Bedruckung erfolgt unter Druck- und Temperatureinfluß, wobei der Druckstempel H ungefähr auf 170°C aufgeheizt ist. Die Trägerfolie (PET) wird durch eine zwischen Trägerfolie (PET) und Lack-/ Farbschicht vorhandene Trenn- oder Ablöseschicht infolge der Wärme abgelöst. Somit verbleibt die Lack-/Farben-/Kleberschicht auf dem zu bedruckenden Gegenstand, also im Beispiel auf der Kassette.

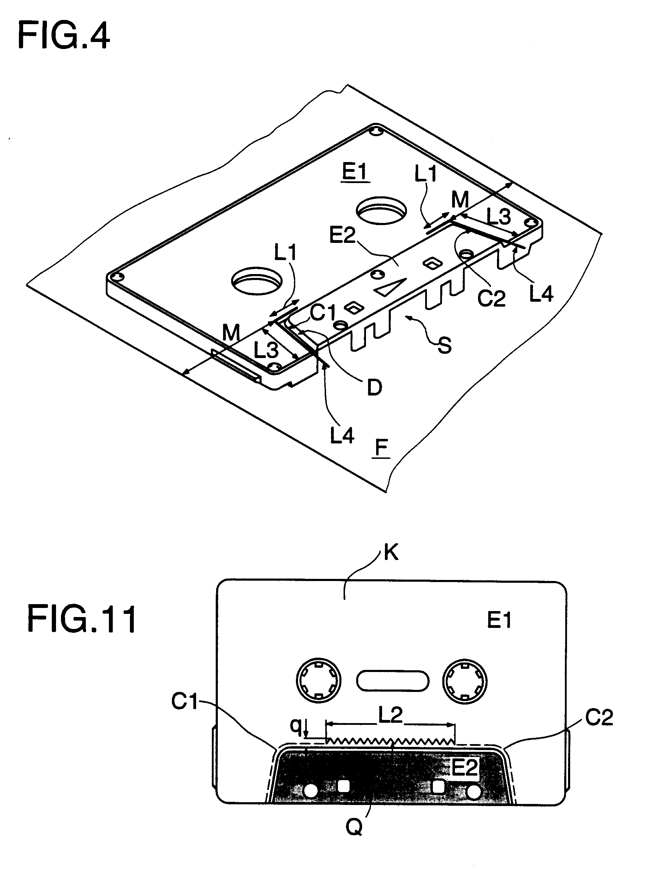

Eine mit der erfindungsgemäßen Folie F mit Einschnitten C1 und C2 (gestrichelt dargestellt) bedruckte Kassette K hat gemäß Figur 11 eine thermische Trennlinie im Bereich der Differenzlänge L2, d.h., im Bereich der Kopferhöhung herrscht beim Drucken eine Temperatur von etwa 170°C und darunter auf Ebene E1 Raumtemperatur von ~ 24°C.

In diesem Bereich Q, der ungefähr durch die Länge L2 gebildet wird, treten, um ein Maß q ~ 0,05-0,2 mm versetzt Zacken- und Wellenform-Ausbildungen auf, die Bedruckungsstörungen in der Randzone der Bedruckung darstellen. Diese Bedruckungsstörungen sind normalerweise kaum erkennbar, sind jedoch für das Bedrucken mit einer Transferfolie mit Einschnitten nach der vorliegenden Erfindung charakteristisch.

Die Transferfolie nach vorliegender Erfindung wurde für die Herstellung einseitig und doppelseitig einfarbig und mehrfarbig bedruckter Kassetten mit Erfolg eingesetzt, da mit wenig Arbeits-, Maschinen- und Materialeinsatz große Stückzahlen schnell herstellbar waren.

Selbstverständlich ist die beschriebene Transferfolie für viele Gegenstände mit Ebenen auf unterschiedlichen Niveaus einsetzbar, z.B. für Drehknöpfe oder -schalter mit Mittelteil und Flanschteil, für Kästen und Behälter, für plastische Bedruckungen im Künstler-Bereich usw.

Eine Transferfolie zum Bedrucken von wenigstens teilweise räumlichen Gegenständen, wobei Oberflächen mit unterschiedlichen Ebenen gleichzeitig und gleichwertig bedruckbar sind, ist im Bereich von Konturlinien der Ebenen teilweise eingeschnitten. Der bedruckte Gegenstand ist gekennzeichnet durch kaum sichtbare Bedruckungsstörungen in Randzonen der Bedruckung. Eine Anwendung kann bei jeglichen Gegenständen mit erhöhten Ebenen, z.B. Behältern, Drehknöpfen usw. erfolgen.

## Patentansprüche

1. Transferfolie zum Bedrucken in einem Arbeitsgang von wenigstens teilweise räumlichen Gegenständen, wobei der Gegenstand (K) wenigstens eine Erhöhung mit einem oberen Niveau (E2) aufweist, die auf einer Ebene mit einem unteren Niveau (E1) angeordnet ist, diese Erhöhung wenigstens eine Draufsichts-Konturlinie (L) besitzt, und daß in der Transferfolie Einschnitte (C1, C2) entsprechend und entlang der Übergangsbereiche, gebildet aus dem Übergang der Draufsichts-Konturlinie (L) vom Längsrichtungsbereich in den Querrichtungsbereich oder umgekehrt und der Übergangsbereich (B1, B2) als mehr oder weniger scharfe Ecke oder auch kurvenförmig ausgebildet sein kann, vorhanden sind, dadurch gekennzeichnet, daß die Transferfolie bei der Bedruckung entlang der Konturlinie (L) mit zwei gegenüberliegenden Eckbereichen einen nicht eingeschnittenen Teil (L2) in Querrichtung zwischen den Einschnitten C1 und C2 aufweist.

2. Transferfolie nach Anspruch 1, dadurch gekennzeichnet, daß die Teile der Draufsichts - Konturlinie (L), die im wesentlichen parallel zur Längsrichtung der Transferfolie (F) verlaufen, als vollständige Längseinschnitte (L3) und die Teile der Draufsichts - Konturlinie (L), die etwa quer zur Längsrichtung der Transferfolie verlaufen als Teil - Quer - Einschnitte (L1) ausgebildet sind und die Schenkel der Einschnitte L1 und L3 den Draufsichtswinkel α bilden.

3. Transferfolie nach Anspruch 2, dadurch gekennzeichnet, daß die vollständigen Längseinschnitte (L3) um den Betrag L4, der mindestens etwa dem Produkt aus dem Abstand der Niveauhöhen (d) mit √2 entspricht, über die Draufsichts - Konturlinie (L) hinaus verlängert sind.

4. Transferfolie nach Anspruch 1, dadurch gekennzeichnet, daß die Einschnitte (C1, C2) als vorgestanzte Trennlinien ausgebildet sind.

5. Transferfolie nach Anspruch 2, dadurch gekennzeichnet, daß die Länge der Teil - Quer - Einschnitte (L1) mit zunehmendem Winkel α geringer

**6.** Transferfolie nach Anspruch 1 und 2, dadurch gekennzeichnet, daß die Länge der Teil - Quer - Einschnitte (L1) von der Größe des Niveauunterschiedes (d) abhängig ist.

**7.** Transferfolie nach Anspruch 1, dadurch gekennzeichnet, daß Bedruckungsstörungen im Bereich der Draufsichts - Konturlinie L durch teilweise Einschnitte (C1, C2) vermieden und am fertigen Produkt in der Randzone der Bedruckung im Bereich L2 der Draufsichts - Konturlinie (L) wellenförmige Bedruckungsstörungen (Q), die mit freiem Auge nicht sichtbar sind, erzeugt werden.

**8.** Transferfolie nach Anspruch 1, dadurch gekennzeichnet, daß die am räumlichen Gegenstand im Randbereich der Bedruckung erzeugten Bedruckungsstörungen in der Größenordnung von q = 0,05 mm bis 0,2 mm liegen.

**9.** Transferfolie nach Anspruch 1 bis 7, wobei der räumliche Gegenstand eine Kassette für bandförmige Aufzeichnungsträger mit charakteristischer Trapezform - Kopferhöhung ist, dadurch gekennzeichnet, daß die mit freiem Auge unsichtbaren Bedruckungsstörungen in Form von Randzonen - Geradlinigkeitsabweichungen auf einer Länge (L2) von etwa 40 mm auf der kürzeren Trapezformstrecke auftreten.

**Claims**

**1.** A transfer film for printing onto at least partially three-dimensional articles in one operation, the article (K) having at least one raised portion with an upper level (E2), which is arranged on a planar portion with a lower level (E1), this raised portion having at least one plan-view contour line (L), and the transfer film having incisions (C1, C2) corresponding to and along the transitional regions, formed by the transition of the plan-view contour line (L) from the region in the longitudinal direction into the region in the transverse direction, or vice versa, and it being possible for the transitional region (B1, B2) to be formed as sharp or not so sharp corners or else in the form of a curve, wherein the transfer film has during printing along the contour line (L) with two opposite corner regions a non-cut-into part (L2) in the transverse direction between the incisions C1 and C2.

**2.** A transfer film as claimed in claim 1, wherein the parts of the plan-view contour line (L) which run substantially parallel to the longitudinal direction of the transfer film (F) are formed as complete longitudinal incisions (L3) and the parts of the plan-view contour line (L) which run approximately transversely to the longitudinal direction of the transfer film are formed as partial transverse incisions (L1) and the extents of the incisions L1 and L2 form the plan-view angle $\alpha$.

**3.** A transfer film as claimed in claim 2, wherein the complete longitudinal incisions (L3) are extended by the amount L4, which corresponds at least approximately to the product of the difference between the levels (d) multiplied by $\sqrt{2}$, beyond the plan-view contour line (L).

**4.** A transfer film as claimed in claim 1, wherein the incisions (C1, C2) are formed as prepunched separating lines.

**5.** A transfer film as claimed in claim 2, wherein the length of the partial transverse incisions (L1) becomes smaller with increasing angle $\alpha$.

**6.** A transfer film as claimed in claims 1 and 2, wherein the length of the partial transverse incisions (L1) is dependent on the size of the difference in levels (d).

**7.** A transfer film as claimed in claim 1, wherein printing defects in the region of the plan-view contour line L are avoided by partial incisions (C1, C2) and wavelike printing defects (Q), which are not visible to the naked eye, are produced on the finished product in the marginal zone of the printing in the region L2 of the plan-view contour line (L).

**8.** A transfer film as claimed in claim 1, wherein the printing defects produced on the three-dimensional article in the marginal region of the printing are of the order of magnitude of q = 0.05 mm to 0.2 mm.

**9.** A transfer film as claimed in claims 1 to 7, the three-dimensional article being a cassette for recording media in tape form with a characteristic trapezoidal raised head portion, wherein the printing defects, invisible to the naked eye, occur in the form of marginal-zone rectilinearity deviations over a length (L2) of about 40 mm on the shorter side of the trapezoid shape.

**Revendications**

**1.** Feuille de transfert pour l'impression dans un processus opératoire concernant des objets au moins partiellement tridimensionnels, l'objet (K) présentant au mois un bossage d'un niveau (E2) supérieur, disposé sur un plan par son niveau inférieur (E1), ce bossage ayant au moins une ligne de contour (L) lorsqu'on observe en vue de dessus, et que, dans la feuille de transfert, sont réalisées des entailles (C1, C2), de manière correspondante et en suivant les zones de transition constituées de la transition de la ligne de contour de vue de dessus (L) entre la zone de direction longitudinale et la zone de direction transversale, ou inversement, et la zone de transition (B1, B2) pouvant être réalisée pour former un angle plus ou moins vif, ou bien également avec une forme courbe, caractérisée par le fait que la feuille de transfert lors de l'impression présente, le long de la ligne de contour (L), avec deux zones d'angle opposées, une partie (L2) non entaillée dans la direction transversale entre les entailles C1 et C2.

2. Feuille de transfert selon la revendication 1, caractérisée par le fait que les parties de la ligne de contour en vue de dessus (L) qui s'étendent sensiblement parallèlement à la direction longitudinale de la feuille de transfert (F) sont réalisées sous la forme d'entailles longitudinales (L3) complètes et les parties de la ligne de contour de vue de dessus (L) qui s'étendent à peu près transversalement par rapport à la direction longitudinale de la feuille de transfert sont réalisées sous la forme d'entailles transversales partielles (L1) et les branches des entailles L1 et L3 constituant l'angle d'observation en vue de dessus α.

3. Feuille de transfert selon la revendication 2, caractérisée par le fait que les entailles longitudinales complètes (L3) sont prolongées de la longueur L4 correspondant au moins à peu près au produit entre l'espacement des niveaux en hauteur (d) par $\sqrt{2}$, sur la ligne de contour de vue de dessus (L).

4. Feuille de transfert selon la revendication 1, caractérisée par le fait que les entailles (C1, C2) sont réalisées sous la forme de lignes de séparation préestompées.

5. Feuille de transfert selon la revendication 2, caractérisée par le fait que la longueur des entailles transversales partielles (L1) diminue si l'angle α augmente.

6. Feuille de transfert selon les revendications 1 et 2, caractérisée par le fait que la longueur des entailles transversales partielles (L1) dépend de la valeur de la différence de niveau (d).

7. Feuille de transfert selon la revendication 1, caractérisée par le fait que des perturbations d'impression, se manifestant dans la zone de la ligne de contour en vue de dessus (L), sont évités en ménageant des entailles partielles (C1, C2) et des perturbations d'impression (Q), à forme ondulée, non visibles à l'oeil nu, étant produites sur le produit terminé dans la zone de bordure de l'impression, dans la zone L2 de la ligne de contour en vue de dessus (L).

8. Feuille de transfert selon la revendication 1, caractérisée par le fait les perturbations d'impression générées sur l'objet tridimensionnel dans la zone de bordure de l'impression sont de l'ordre de grandeur de q = 0,05 mm à 0,2 mm.

9. Feuille de transfert selon les revendications 1 à 7, pour laquelle l'objet tridimensionnel est une cassette destinée à des supports d'enregistrement se présentant sous forme de bande ayant un bossage de tête à forme trapézoïdale caractéristique, caractérisée par le fait que les perturbations d'impression invisibles à l'oeil nu se produisent sous la forme d'écarts de rectitude des zones de bordure, sur une longueur (L2) d'environ 40 mm sur le côté court de la forme trapézoïdale.

## FIG.1

## FIG.2

## FIG.3

8

# FIG.5

# FIG.6

# FIG.7

**FIG.8**

$z = f(L1)$

**FIG.9**

$z = f(\alpha)$

$L1 = 10$ mm

**FIG.10**

$h = f(L1)$
$h = f(L2)$

# FIG.4

# FIG.11